# EUROPEAN PATENT SPECIFICATION

(11) **EP 3 502 644 B1**
(45) Date of publication and mention of the grant of the patent: **03.11.2021**
(21) Application number: 18213319.9
(22) Date of filing: 18.12.2018
(51) Int. Cl.: G01M 3/32

(54) **LEAK TESTING METHODS FOR TANKS**
LECKAGETESTMETHODEN FÜR TANKS
METHODES D'ESSAI DE FUITE POUR RESERVOIRS

(30) Priority: 19.12.2017 IT 201700146627
(43) Date of publication of application: 26.06.2019
(73) Proprietor: Tognetti, Michele, 55049 Viareggio (LU) (IT)
(72) Inventor: Tognetti, Michele, 55049 Viareggio (LU) (IT)
(74) Representative: Lunati & Mazzoni S.r.L.

(56) References cited:
- DE-A1-102013 020 388
- US-A1- 2011 153 232

## Description

The present invention relates to a leak testing method for tanks of the type as recited in the preamble of Claim 1.

In particular, the invention relates to a process allowing to check the leakproofness of a tank preferably mounted on a vessel.

As is well known, leak testing of tanks is a test that must be carried out on a fluid supply tank (gas or liquid) before it is put into service, i.e. before it is connected to different utilities.

Leak testing requires the tank to be closed, for example by placing caps downstream/upstream of each tap to ensure leakproofness. At this point, a gas (e.g. an inert gas) is introduced into the tank until a desired internal pressure is reached.

Once this internal pressure has been stabilised, a water pressure gauge is connected to the tank and, then, a first measurement is carried out.

The measurement is repeated at regular intervals.

If no leakage is found during all measurements, i.e. no change in the water level in the pressure gauge, the tank is deemed to be compliant and leak-free.

Mechanical pressure gauges can be used instead of water pressure gauges, especially at high pressures (above 0.5 bar).

The prior art described above and for examples disclosed DE102013020388A1 or in US2011153232A1, has some notable drawbacks.

In particular, the leak testing method of a tank is imprecise and therefore frequently subject to measurement errors. This results in a complicated analysis of the data obtained and often in an incorrect evaluation of the tank leakproofness. Therefore,

it may happen that a non-sealed tank is considered to be leakproof, or that a sealed tank is considered to be non-leakproof.

Another drawback is that the testing is difficult to be carried out.

In this context, the technical task underlying the present invention is to devise a leak testing method for tanks capable of substantially obviating at least some of the above-mentioned drawbacks.

In the context of said technical task, it is an important aim of the invention to obtain a leak testing method for tanks that allows a simple and precise evaluation of tank leakproofness.

The technical task and specified aims are achieved with a leak testing method for tanks as claimed in the appended Claim 1 and the corresponding leak testing device as claimed in the appended Claim 3. A preferred embodiment is described in the dependent claim.

The characteristics and advantages of the invention are clearly evident from the following detailed description of preferred embodiments of the invention, with reference to the accompanying drawings, in which:

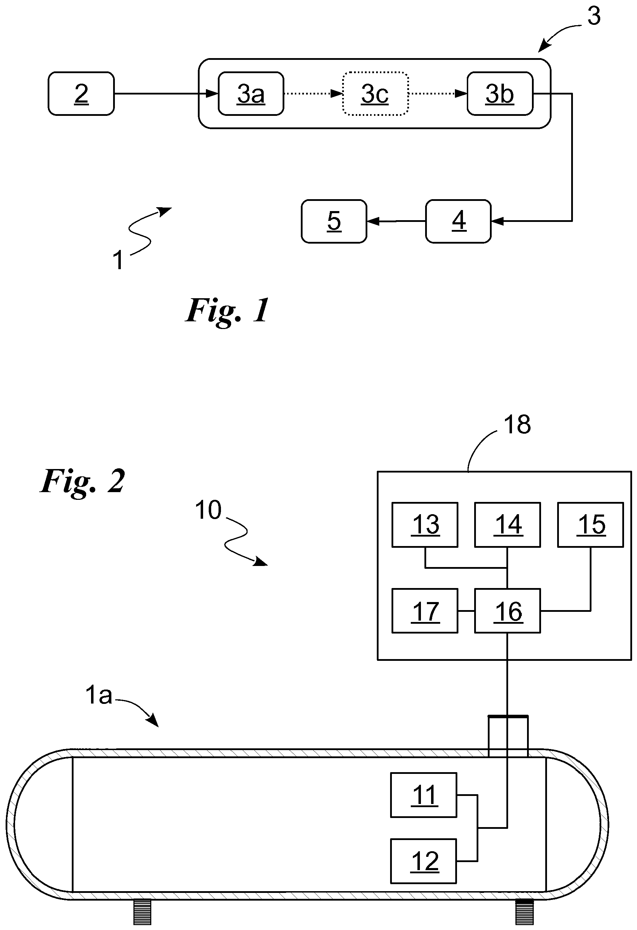

**Fig. 1** schematically illustrates a leak testing method for tanks according to the invention; and
**Fig. 2** shows a device capable of carrying out the leak testing method according to the invention.

Herein, the measures, values, shapes and geometric references (such as perpendicularity and parallelism), when used with words like "about" or other similar terms such as "approximately" or "substantially", are to be understood as except for measurement errors or inaccuracies due to production and/or manufacturing errors and, above all, except for a slight divergence from the value, measure, shape or geometric reference with which it is associated. For example, these terms, if associated with a value, preferably indicate a divergence of not more than 10% from said value.

Furthermore, when used, terms such as "first", "second", "higher", "lower", "main" and "secondary" do not necessarily identify an order, a priority relationship or a relative position, but can simply be used to distinguish more clearly the different components from each other.

Unless otherwise indicated, the measurements and data provided in this document are to be considered using International Standard Atmosphere ICAO (ISO 2533).

Unless otherwise specified, as is apparent from the following discussion, terms such as "treatment", "data processing", "determination", "calculation", or the like, are understood to refer to the action and/or processes of a computer or similar electronic computing device which manipulates and/or transforms data represented as physical, such as electronic sizes of registers of a computer system and/or memories, into other data similarly represented as physical quantities in computer systems, registers or other storage, transmission or information display devices. With reference to the figures, reference numeral **1** globally denotes the leak testing method for a tank according to the invention.

The leak testing method 1 of at least one tank **1a** is suitable for being implemented by means of a leak testing device **10** of a tank 1a preferably inside a vessel.

In particular, the leak testing method 1 and therefore the leak testing device 10 are suitable for carrying out a leakproofness test (i.e. no leakage of fluid) and/or a structural strength test (i.e. the ability to withstand loads/pressures) of a tank 1a.

In particular, the leak testing method 1 and therefore the leak testing device 10 are suitable for testing one tank 1a or preferably more tanks 1a (in detail three or four) appropriately at the same time.

The leak testing device 10 comprises, for each tank 1a, at least one first sensor **11** for measuring the internal temperature of the tank 1a and at least a second sensor **12** for measuring the internal pressure of the tank 1a.

The second sensor 12 is suitable for measuring the internal absolute pressure of the tank 1a. Alternatively, it is suitable for measuring the internal relative pressure of the tank 1a, i.e. the difference between the internal absolute pressure of the tank and the external/environment pressure.

The first sensor 11 defines a first measurement error, i.e. the maximum error that can affect the measurement of the first sensor 11 (temperature). This error is intrinsic to the first sensor 11 and is defined by the construction characteristics of the first sensor 11. The error can depend on the detected temperature.

The second sensor 12 defines a second measurement error, i.e. the maximum error that can affect the measurement of the second sensor 12 (pressure). This error is intrinsic to the second sensor 12 and is therefore defined by the construction characteristics of the second sensor 12. The error can depend on the detected pressure.

The leak testing device 10 may comprise an additional first sensor **13** for measuring the temperature outside the tank 1a, i.e. the ambient temperature.

The additional first sensor 13 can be identical to the first sensor 11 and thus define the same second measurement error.

The leak testing device 10 comprises an additional second sensor **14** for measuring the pressure outside the tank 1a, i.e. the ambient pressure.

The additional second sensor 14 can be identical to the second sensor 12 and thus define the same second measurement error.

The leak testing device 10 comprises a memory **15** suitable for storing the data and in particular the pressure and temperature values measured by said sensors 11, 12 and 14 and optionally 13.

The memory 15 has a data connection with said sensors.

In this document, the expression "data connection" may be physical, i.e. performed through connectors (such as USB) or wiring, and/or wireless (such as a mobile data network such as GSM) so as to allow the remote control of the operation of the device 10.

The leak testing device 10 comprises a control unit **16** of the leak testing device 10. The control unit 16 has a data connection with at least one of the memory 15 and/or the sensors 11, 12 and 14 and possibly 13 so as to control the measurements (temperature and pressure) that have been carried out.

The leak testing device 10 comprises interface means **17** with an operator which is suitably in data connection with the control unit 16.

The interface means 17 can be input means and in particular suitable to allow an operator to control the device operation. Thus, said means can comprise one or more control buttons.

The interface means 17 can be output means and in particular suitable to allow an operator to view the data (pressure and temperature) acquired by the device 10 and/or the testing outcome. Thus, they can comprise a screen.

The interface means 17 can be input and output means.

The leak testing device 10 comprises a housing **18** defining an at least partial housing volume for the control unit 16, memory 15, interface means 17 and additional second sensors 13 and 14.

The leak testing method 1 comprises a preparation step **2** of the tank 1a.

In this preparation step 2 the sensors 11 and 12 are connected and, in detail, in a fluidic though connection with the tank 1a in order to measure its internal pressure and temperature. In detail they are arranged in the tank 1a.

Therefore, a fluidic though connection between the tank 1a and the outside (including utilities) is prevented. The tank 1a is hermetically sealed.

In the preparation step 2 the tank 1a is filled with a fluid (such as a preferably inert gas) suitably up to a predefined pressure.

Once the pressure and temperature of the fluid in the tank 1a are uniform and stabilised, the preparation step 2 is completed.

The leak testing procedure 1 comprises a plurality of measurement steps 3, in each of which a first sensor 11 measures the internal temperature of the tank 1a and a second sensor 12 measures the internal pressure of the tank 1a.

An additional second sensor 14 measures the pressure outside the tank 1a and optionally an additional first sensor 13 measures the temperature outside the tank 1a.

In the measurement steps 3, an initial measurement step 3a for measuring the internal pressure and temperature of tank 1a at the beginning of the testing and a final measurement step **3b** for measuring the internal pressure and temperature of tank 1a at the end of the testing can be identified.

Preferably, in measurement steps 3, in addition to steps 3a and 3b, at least one intermediate measurement step **3c** of the internal pressure and temperature of tank 1a can be identified during testing.

Said at least one intermediate measurement step 3c is temporally equally spaced from the initial measurement step 3a and final measurement step 3b, in the case of more than one intermediate measurement step 3c they are equally spaced.

The temperatures and pressures detected in the various measurement steps 3 are stored in the memory 15.

The leak testing method 1 comprises a displaying step **5** for displaying the testing results suitably through the interface means 17.

The leak testing method 1 according to the invention achieves some important advantages.

In fact, the leak testing method 1 allows to check in a precise way the leakproofness of a tank 1a and then to correctly evaluate whether the tank 1a is sealed or not and therefore leakproof, as required.

Another advantage is that the normalisation of the external pressure and optionally external temperature prevents that any change in the conditions outside the tank 1a may influence the testing.

In particular, thanks to the presence of the additional second sensor 14 measuring the pressure outside the tank 1a, in measurement steps 3 the additional second sensor 14 measures the pressure outside the tank 1a so that in the estimation step 4 the leakproofness of the tank 1a is determined by comparing the ratios between the internal pressure - normalized to the external pressure - and the internal temperature. This ensures that the leak testing method 1, normalizing the internal pressure to the external one, makes the detection independent of the external pressure variation and therefore allows to prevent that a change in the atmospheric pressure, varying its action on the tank, determines a measurement change that, according to the extreme precision required, can influence and affect the leakproofness measurement of the tank. This aspect avoids wrong assessments (false positives or false negatives) and makes the method 1 more reliable compared to known methods.

The invention is subject to variations without departing from the scope of the inventive concept as defined in the claims.

## Claims

1. A leak testing method (1) for a tank (1a) comprising
- a plurality of measurement steps (3) in each of which a first sensor (11) measures the internal temperature of said tank (1a) and a second sensor (12) measures the internal pressure of said tank (1a);
- at least one estimation step (4) in which the leakproofness of said tank (1a) is determined by comparing the ratios between said internal pressure and said internal temperature measured in separate measurement steps (3);
**characterised in that it comprises**
an additional second sensor (14) suitable for measuring the pressure outside said tank (1a) and wherein in each of said measurement steps (3) said additional second sensor (14) measures the pressure outside said tank (1a); and wherein in said estimation step (4) the leakproofness of said tank (1a) is determined by comparing the ratios between said internal pressure normalized to said external pressure and said internal temperature.

2. Leak testing method (1) according to claim 1, comprising an additional first sensor (13) suitable for measuring the temperature outside said tank (1a) and wherein in each of said measurement steps (3) said additional first sensor (13) measures the temperature outside said tank (1a); and wherein in said estimation step (4) the leakproofness of said tank (1a) is determined by comparing the ratios between said internal pressure normalized to said external pressure and said internal temperature normalized to said external temperature.

3. Leak testing device (10) for a tank (1a) comprising
- at least one first sensor (11) for measuring the internal temperature of said tank (1a);
- at least one second sensor (12) for measuring the internal pressure of said 10 tank (1a);
- an additional second sensor (14) suitable for measuring the pressure outside said tank (1 a);
**characterized in that** the leak detection device (10) further comprises
- a control unit (16) configured to carry out a method according to one of claims 1 and 2.

## Patentansprüche

1. Leckagetestmethode (1) für einen Tank (1a), umfassend
- eine Vielzahl von Messschritten (3), bei denen jeweils ein erster Sensor (11) die Innentemperatur des genannten Tanks (1a) misst und ein zweiter Sensor (12) den Innendruck des genannten Tanks (1a) misst;
- mindestens einen Schätzschritt (4), bei dem die Dichtigkeit des genannten Tanks (1a) bestimmt wird, indem die Verhältnisse zwischen dem genannten Innendruck und der genannten Innentemperatur, die in verschiedenen der genannten Messschritte (3) gemessen wurden, verglichen werden;
**dadurch gekennzeichnet, dass** sie Folgendes umfasst
- einen zusätzlichen zweiten Sensor (14), der geeignet ist, den Druck außerhalb des genannten Tanks (1a) zu messen; wobei bei jedem der genannten Messschritte (3) der genannte zusätzliche zweite Sensor (14) den Druck außerhalb des genannten Tanks (1a) misst; und wobei bei dem genannten Schätzschritt (4) die Dichtigkeit des genannten Tanks (1a) durch Vergleichen der Verhältnisse zwischen dem auf den genannten Außendruck normalisierten genannten Innendruck und der genannten Innentemperatur gemessen werden.

2. Leckagetestmethode (1) nach Anspruch 1, umfassend einen zusätzlichen ersten Sensor (13), der geeignet ist, die Temperatur außerhalb des genannten Tanks (1a) zu messen; wobei bei jedem der genannten Messschritte (3) der genannte zusätzliche erste Sensor (13) die Temperatur außerhalb des genannten Tanks (1a) misst; und wobei bei dem genannten Schätzschritt (4) die Dichtigkeit des genannten Tanks (1a) durch Vergleichen der Verhältnisse zwischen dem genannten Innendruck und der auf die genannte Außentemperatur normalisierten genannten Innentemperatur gemessen werden.

3. Leckagetestvorrichtung (10) für einen Tank (1a), umfassend
- mindestens einen ersten Sensor (11) zum Messen der Innentemperatur des genannten Tanks (1a);
- mindestens einen zweiten Sensor (12) zum Messen des Innendrucks des genannten Tanks (1a); und
**dadurch gekennzeichnet, dass** sie Folgendes umfasst
- einen zusätzlichen zweiten Sensor (14), der geeignet ist, den Druck außerhalb des genannten Tanks (1a) zu messen;
wobei die genannte Leckagetestvorrichtung (10) außerdem Folgendes umfasst
- ein Steuergerät (16), das darauf ausgelegt ist, die Methode gemäß einem der Ansprüche 1 oder 2 umzusetzen.

## Revendications

1. Méthode d'essai de fuite (1) pour un réservoir (1a) comprenant :
- une pluralité d'étapes de mesure (3) dans chacune desquelles un premier capteur (11) mesure la température interne dudit réservoir (1a) et un second capteur (12) mesure la pression interne dudit réservoir (1a) ;
- au moins une étape d'évaluation (4) dans laquelle l'étanchéité dudit réservoir (1a) est déterminée en comparant les rapports entre ladite pression interne et ladite température interne mesurés dans lesdites étapes de mesure distinctes (3) ;
**caractérisée en ce qu'**elle comprend :
- un second capteur supplémentaire (14) apte à mesurer la pression externe dudit réservoir (la) ; dans laquelle dans chacune desdites étapes de mesure (3) ledit second capteur supplémentaire (14) mesure la pression externe dudit réservoir (1a) ; et dans laquelle, dans ladite étape d'évaluation (4) l'étanchéité dudit réservoir (1a) est déterminée en comparant les rapports entre ladite pression interne normalisée par rapport à ladite pression externe et ladite température interne.

2. Méthode d'essai de fuite (1) selon la revendication 1, comprenant un premier capteur supplémentaire (13) apte à mesurer la température externe dudit réservoir (1a) ; dans laquelle dans chacune desdites étapes de mesure (3) ledit premier capteur supplémentaire (13) mesure la température externe dudit réservoir (1a) ; et dans laquelle dans ladite étape d'évaluation (4) l'étanchéité dudit réservoir (1a) est déterminée en comparant les rapports entre ladite pression interne et ladite température interne normalisée par rapport à ladite température externe.

3. Dispositif d'essai de fuite (10) pour un réservoir (1a) comprenant :
- au moins un premier capteur (11) de mesure de la température interne dudit réservoir (la) ;
- au moins un second capteur (12) de mesure de la pression interne dudit réservoir (1a) ; et
**caractérisé en ce qu'**il comprend :
- un second capteur supplémentaire (14) apte à mesurer la pression externe dudit réservoir (1a) ;
ledit dispositif d'essai de fuite (10) comprenant en outre :
- une boite de commande (16) configurée pour mettre en oeuvre la méthode selon l'une des revendications 1 ou 2.
